# EUROPEAN PATENT APPLICATION

(11) **EP 4 375 802 A1**
(43) Date of publication of application: **29.05.2024**
(21) Application number: 21950569.0
(22) Date of filing: 23.07.2021
(51) Int. Cl.: G06F 3/01

(54) **OVER-THE-AIR (OTA) UPGRADE METHOD AND APPARATUS**

(71) Applicant: Huawei Technologies Co., Ltd., Longgang Shenzhen, Guangdong 518129 (CN)
(72) Inventor: MA, Tao, Shenzhen, Guangdong 518129 (CN)
(74) Representative: Huawei European IPR
(86) International application number: PCT/CN2021/108210
(87) International publication number: WO 2023/000320

(57) **Abstract**

Embodiments of this application provide an OTA upgrade method and an apparatus, and are applied to the field of the Internet of vehicles. In a specific application, a server generates a first upgrade task, where the first upgrade task is corresponding to a first execution condition, the first execution condition includes a status of a terminal device, and the status includes that no creature exists in the terminal device. The server sends the first upgrade task to the terminal device. After receiving the first upgrade task, the terminal device obtains, based on the first execution condition corresponding to the first upgrade task, a first status including a first biometric recognition result, and executes, based on different first biometric recognition results, a first operation corresponding to the first status. In this manner, an OTA upgrade task is capable of being executed in an environment with ensured safety.

## Description

### TECHNICAL FIELD

Embodiments of this application relate to the field of Internet of vehicles technologies, and in particular, to an OTA upgrade method and an apparatus.

### BACKGROUND

With social development and advance in science and technology, intelligent vehicles are increasingly widely applied in the fields of intelligent driving and unmanned driving. An intelligent vehicle is a complex system, including dozens or even hundreds of electronic control units (electronic control units, ECUs). Various complex functions of the intelligent vehicle are implemented through collaboration between ECUs.

A manufacturer (original equipment manufacturer, OEM) of an intelligent vehicle maintains and upgrades various functions of the intelligent vehicle mainly by upgrading ECUs related to these functions. An over the air (over the air, OTA) technology may be used to upgrade related hardware or software of a vehicle, to help a manufacturer reduce recall costs, quickly meet a requirement, and improve user experience. However, when the intelligent vehicle executes an OTA upgrade task, an original software or hardware function is in an unavailable state, causing a safety problem. During execution of an OTA upgrade task, how to ensure that the OTA upgrade task is executed in an environment with ensured safety is a technical issue to be urgently resolved by a person skilled in the art.

### SUMMARY

Embodiments of this application disclose an OTA upgrade method and a corresponding apparatus, to implement a safe OTA upgrade, that is, to ensure that the OTA upgrade is capable of being executed in an environment with ensured safety (especially ensured personal safety).

According to a first aspect, an upgrade method is provided. The method may be performed by a terminal device or a chip configured in the terminal device. The method includes: receiving a first upgrade task, where the first upgrade task is corresponding to a first execution condition; obtaining a first status of a terminal device based on the first execution condition, where the first status includes a first biometric recognition result; and performing a first operation corresponding to the first status.

In an optional design, the method may be alternatively performed by an OTA management module included in the terminal device or a chip configured in the OTA management module.

According to this solution, before an OTA task is executed, the first biometric recognition result is first obtained, and the corresponding first operation is performed based on the first biometric recognition result. Because the first status of the terminal device is considered, an OTA upgrade is capable of being executed in an environment with ensured safety.

With reference to the first aspect, in some implementations of the first aspect, the performing a first operation corresponding to the first status includes: if the first biometric recognition result is that a creature exists in the terminal device, performing the first operation corresponding to the first status is outputting a first prompt, where the first prompt indicates that the first upgrade task is incapable of being executed; or if the first biometric recognition result is that no creature exists in the terminal device, performing the first operation corresponding to the first status is executing the first upgrade task.

According to this solution, different operations are performed based on different biometric recognition results, so that the OTA upgrade is capable of being executed in the environment with ensured safety.

In an optional design, the first prompt may be output by using one or more of the following: a mobile phone, a wearable device, a tablet computer, a notebook computer, and an HMI interface.

In an optional design, the first prompt is highlighted in a prominent manner. Based on this, an execution status of the first upgrade task can be easily concerned.

With reference to the first aspect, in some implementations of the first aspect, when performing the first operation corresponding to the first status is executing the first upgrade task, the method further includes: controlling a door lock of the terminal device to be in a locked state and/or outputting a second prompt, where the second prompt indicates that no creature is supposed to exist in the terminal device.

According to this solution, a person outside the terminal device can be prevented from entering the terminal device in a process of executing the first upgrade task. This ensures that in the process of executing the first upgrade task, the OTA upgrade is executed in the environment with ensured safety (especially ensured personal safety).

In an optional design, the second prompt may further include time information T, to indicate that no creature is supposed to exist in the terminal device within a time range that satisfies the time information T. Based on this, the terminal device can be used in time after execution of the first upgrade task is completed.

In an optional design, the second prompt may be output by using one or more of the following: a mobile phone, a wearable device, a tablet computer, and a notebook computer.

In an optional design, the second prompt is highlighted in a prominent manner. In this way, the execution condition of the first upgrade task can be easily concerned, to ensure that the first upgrade task is capable of being executed in the environment with ensured safety .

With reference to the first aspect, in some implementations of the first aspect, when performing the first operation corresponding to the first status is executing the first upgrade task, the method further includes: obtaining a door lock status of the terminal device, where the door lock status of the terminal device includes that the door lock is opened; and/or obtaining a second status of the terminal device, where the second status includes a second biometric recognition result, and the second biometric recognition result is that a creature exists in the terminal device; and suspending or terminating execution of the first upgrade task.

According to this solution, in the process of executing the first upgrade task, once it is found that the person outside the terminal device attempts to enter or has entered the terminal device, execution of the first upgrade task can be suspended or terminated. Based on this, in the process of executing the first upgrade task, the OTA upgrade is capable of being executed in the environment with ensured safety (especially ensured personal safety). In addition, according to this solution, normal use of the terminal device in a specific scenario can be further ensured.

With reference to the first aspect, in some implementations of the first aspect, when performing the first operation corresponding to the first status is executing the first upgrade task, the method further includes: obtaining a door lock status of the terminal device, where the door lock status of the terminal device includes that the door lock is opened; and/or obtaining a second status of the terminal device, where the second status includes a second biometric recognition result, and the second biometric recognition result is that a creature exists in the terminal device; determining that a first upgrade subtask included in the first upgrade task is completed, where the first upgrade subtask is corresponding to an upgrade of a biosafety-related component; and continuing to execute the first upgrade task.

According to this solution, an upgrade task corresponding to the biosafety-related component is capable of being executed in the environment with ensured safety, without affecting execution of other upgrade tasks. This ensures execution efficiency of an upgrade task.

With reference to the first aspect, in some implementations of the first aspect, when performing the first operation corresponding to the first status is outputting the first prompt, the method further includes: outputting a third prompt, where the third prompt indicates a reason why the first upgrade task is incapable of being executed and/or a condition for re-executing the first upgrade task.

According to this solution, the reason why the first upgrade task has not been executed and/or the condition under which the first upgrade task is capable of being executed can be learned. This ensures that the OTA upgrade can be subsequently executed in the safe environment.

In an optional design, the third prompt may be output by using one or more of the following: a mobile phone, a wearable device, a tablet computer, a notebook computer, and an HMI interface.

In an optional design, the third prompt is highlighted in a prominent manner. Based on this, the reason why the first upgrade task has not been executed or the first execution condition can be easily concerned.

With reference to the first aspect, in some implementations of the first aspect, this solution further includes: outputting a fourth prompt, where the fourth prompt indicates the first execution condition.

With reference to the first aspect, in some implementations of the first aspect, this solution further includes: determining, based on a setting, whether to obtain the first status based on confirmation information in response to the fourth prompt. According to this solution, flexibility of the OTA upgrade can be implemented. When it is specified that an operation associated with an upgrade task needs to be performed based on the confirmation information corresponding to the fourth information, a user of the terminal device may choose to start execution of the first upgrade task in a proper scenario. This can ensure normal use of the terminal device, and can ensure that the OTA upgrade is executed in the safe environment.

With reference to the first aspect, in some implementations of the first aspect, this solution further includes: receiving the first execution condition from a server; or determining the first execution condition based on a configured or defined mapping relationship between an upgrade task and an execution condition.

According to this solution, the first execution condition can be determined, to ensure that the OTA upgrade is executed in a proper execution environment. This ensures safety of the OTA upgrade.

With reference to the first aspect, in some implementations of the first aspect, the obtaining a first status of a terminal device includes: obtaining the first status by using a sensor in the terminal device, where the sensor includes one or more of the following: a camera, a pressure sensor, a millimeter wave radar sensor, and a lidar.

According to a second aspect, an upgrade method is provided. The method may be performed by a server or a chip configured in the server. The method includes: generating a first upgrade task, where the first upgrade task is corresponding to a first execution condition, the first execution condition includes a status of a terminal device, and the status of the terminal device includes that no creature exists in the terminal device; and sending the first upgrade task.

With reference to the second aspect, in some implementations of the second aspect, the method may further include: configuring the first execution condition based on the first upgrade task; and sending the first execution condition.

In an optional design, the first upgrade task includes a first upgrade subtask, and the first upgrade subtask is corresponding to an upgrade of a biosafety-related component.

According to a third aspect, a communication apparatus is provided, including a processing unit and a transceiver unit, to perform the method in any one of the first aspect or the possible implementations of the first aspect, or perform the method in any one of the second aspect or the possible implementations of the second aspect.

According to a fourth aspect, a communication apparatus is provided, including at least one processor and a transceiver. The at least one processor is configured to invoke a computer program stored in at least one memory, to perform the method in any one of the first aspect or the possible implementations of the first aspect, or perform the method in any one of the second aspect or the possible implementations of the second aspect. The transceiver is configured to perform functions related to sending and receiving. In an optional design, the transceiver includes a receiver and a transmitter, or includes a receiving set and a sending set.

With reference to the fourth aspect, in some implementations of the fourth aspect, the communication apparatus further includes a memory, the memory is coupled to the processor included in the communication apparatus, and the processor may be configured to execute instructions in the memory, so that the apparatus performs the method in any one of the first aspect or the possible implementations of the first aspect, or performs the method in any one of the second aspect or the possible implementations of the second aspect. In an optional design, the apparatus may further include an interface circuit, and the processor is coupled to the interface circuit.

With reference to the fourth aspect, in some implementations of the fourth aspect, the communication apparatus is a communication chip, and the transceiver may be an input/output circuit or port of the communication chip.

According to a fifth aspect, a terminal device is provided. The terminal device includes the communication apparatus configured to perform the method in any one of the first aspect or the possible implementations of the first aspect.

According to a sixth aspect, a server is provided. The server includes the communication apparatus configured to perform the method in any one of the second aspect or the possible implementations of the second aspect.

According to a seventh aspect, a communication system is provided. The communication system includes the communication apparatus configured to perform the method in any one of the first aspect or the possible implementations of the first aspect and/or the communication apparatus configured to perform the method in any one of the second aspect or the possible implementations of the second aspect.

According to an eighth aspect, a chip is provided. The chip includes one or more processors and an interface circuit. The chip is configured to perform the method in any one of the first aspect or the possible implementations of the first aspect, or perform the method in any one of the second aspect or the possible implementations of the second aspect.

According to a ninth aspect, a computer-readable storage medium is provided. The computer-readable storage medium stores a computer program or instructions. When the computer program or instructions are executed by a communication apparatus, the communication apparatus is enabled to perform the method in any one of the first aspect or the possible implementations of the first aspect, or the communication apparatus is enabled to perform the method in any one of the second aspect or the possible implementations of the second aspect.

According to a tenth aspect, a computer program product is provided. The computer program product includes a computer program or instructions. When the computer program or instructions are executed by a communication apparatus, the communication apparatus is enabled to perform the method in any one of the first aspect or the possible implementations of the first aspect, or the communication apparatus is enabled to perform the method in any one of the second aspect or the possible implementations of the second aspect.

### BRIEF DESCRIPTION OF DRAWINGS

The following describes accompanying drawings used in embodiments of this application.
FIG. 1 is a schematic diagram of an upgrade system architecture according to an embodiment of this application;
FIG. 2 is a schematic diagram of a terminal device according to an embodiment of this application;
FIG. 3 is a schematic diagram of another upgrade system architecture according to an embodiment of this application;
FIG. 4 is a schematic diagram of another upgrade system architecture according to an embodiment of this application;
FIG. 5 is a schematic flowchart corresponding to an upgrade method according to an embodiment of this application;
FIG. 6 is a schematic diagram of a communication apparatus according to an embodiment of this application;
FIG. 7 is a schematic diagram of another communication apparatus according to an embodiment of this application; and
FIG. 8 is a schematic diagram of a structure of a chip according to an embodiment of this application.

### DESCRIPTION OF EMBODIMENTS

The following details technical solutions in embodiments of this application with reference to the accompanying drawings in embodiments of this application.

It should be noted that in embodiments of this application, a term "example", "for example", or the like is used to represent giving an example, an illustration, or descriptions. Any embodiment or design scheme described as "example" or "for example" in this application should not be construed as being preferred or having more advantages over other embodiments or design schemes. Exactly, use of the term "example", "for example", or the like is intended to present a related concept in a specific manner.

A term "and/or" mentioned in embodiments of this application is used to describe an association relationship for describing associated objects and represents that three relationships may exist. For example, A and/or B may represent the following three cases: Only A exists, both A and B exist, and only B exists. A and B each may be in a singular or plural form. A character "/" generally indicates an "or" relationship between associated objects.

In addition, unless otherwise specified, ordinal numbers such as "first" and "second" in embodiments of this application are used to distinguish between a plurality of objects, and are not intended to limit a sequence, a time sequence, priorities, or importance of the plurality of objects. For example, first information and second information are merely used to distinguish between different information, but do not indicate a difference between the two types of information in content, priorities, sending sequences, or importance.

The following first describes a system architecture and a service scenario in embodiments of this application. It should be noted that the system architecture and the service scenario that are described in this application are intended to describe the technical solutions in this application more clearly, but do not constitute limitations on the technical solutions provided in this application. A person of ordinary skill in the art can know that with evolution of the system architecture and emergence of a new service scenario, the technical solutions provided in this application are also applicable to similar technical issues.

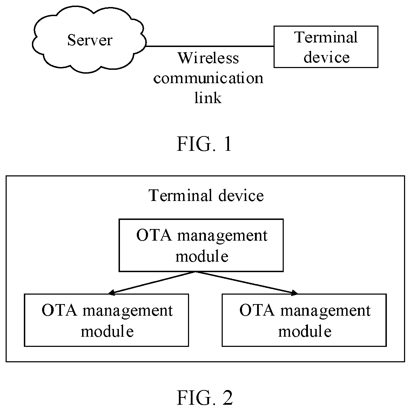

FIG. 1 is a schematic diagram of an upgrade system architecture to which an embodiment of this application is applicable. As shown in FIG. 1, the upgrade system architecture may include a server, a wireless communication link, and a terminal device.

For example, the server in this embodiment of this application is an apparatus that can provide an OTA upgrade for the terminal device by a manufacturer or an OEM. Specifically, the server may be deployed on an electronic device having a wireless communication function and a storage function, or may be deployed on a virtual machine or a container on a cloud side. The cloud side may be a cluster including a plurality of electronic devices.

For example, the wireless communication link in this embodiment of this application may be a link implemented by using a communication network. The communication network may be a local area network, or may be a wide area network transferred by using a relay (relay) device, or may include a local area network and a wide area network. When the communication network is a local area network, the communication network may be a Wi-Fi hotspot network, a Wi-Fi point-to-point (point to point, P2P) network, a Bluetooth network, a ZigBee network, a near field communication (near field communication, NFC) network, a possible future universal short-range communication network, or the like. When the communication network is a wide area network, the communication network may be a third-generation mobile communication technology (3rd-generation wireless telephone technology, 3G) network, a fourth-generation mobile communication technology (4th-generation mobile communication technology, 4G) network, a fifth-generation mobile communication technology (5th-generation mobile communication technology, 5G) network, a future evolved mobile communication technology network (including but not limited to 6G), a public land mobile network (public land mobile network, PLMN), the Internet (Internet), or the like. This is not limited in embodiments of this application.

For example, the terminal device in this embodiment of this application is an apparatus that supports an OTA upgrade service provided by the server. For example, the terminal device may be a means of transport or an intelligent device. Specifically, the means of transport may include a motor vehicle (for example, an unmanned vehicle, an intelligent vehicle, an electric vehicle, or a digital vehicle), an uncrewed aerial vehicle, a railcar, a traffic light, or the like.

FIG. 2 is a schematic diagram of a terminal device according to an embodiment of this application. As shown in FIG. 2, the terminal device includes an OTA management module (which may be referred to as an OTA master module) and a plurality of OTA upgrade modules (which may be referred to as OTA slave modules). The OTAmanagement module is configured to: receive an upgrade package from a server, and send, to an OTA upgrade module, an upgrade package of an upgrade object for which the OTA upgrade module is responsible. The OTA upgrade module is configured to: install the upgrade package, and feed back an installation result of the upgrade package to the OTA management module. In an optional design, a specific form of the upgrade object is not limited in embodiments of this application. An intelligent vehicle is used as an example. The upgrade object may be a component in the vehicle, or may be software in the component.

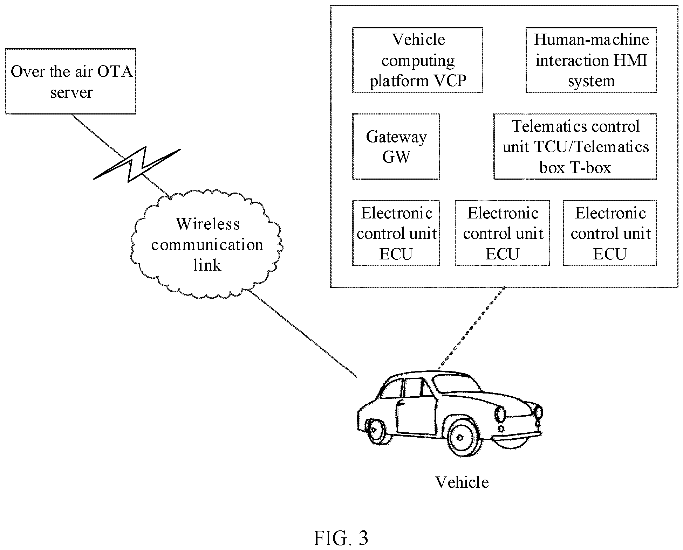

An intelligent vehicle is used as an example. FIG. 3 is a schematic diagram of another upgrade system architecture to which an embodiment of this application is applicable. As shown in FIG. 3, the upgrade system architecture may include an OTA server, a wireless communication link, and a vehicle. The vehicle includes at least components such as a gateway (gateway, GW), an integrated software and hardware platform used to support intelligent driving, namely, a vehicle computing platform (vehicle computing platform, VCP), a human-machine interaction (human-machine interaction, HMI) system, a telematics control unit (telematics control unit, TCU), a telematics box (telematics box, T-box), and electronic control units ECUs. The GW is a core component in an electronic and electrical architecture of the vehicle. As a data exchange hub of networks of the vehicle, the GW may route data of networks such as a controller area network (controller area network, CAN), a local interconnect network (local interconnect network, LIN), and a media oriented system transport (media oriented system transport, MOST) network on different networks. The VCP may be configured to implement an autonomous driving function of the vehicle. The HMI may be configured to display human-machine interaction information. The TCU and the T-box are mainly configured to communicate with an external device (for example, a mobile phone or a background system) of the vehicle. The ECU is a vehicle-specific microcomputer controller. The ECU includes but is not limited to a vehicle integration unit (vehicle integrated/integration unit, VIU), a cockpit domain controller (cockpit domain controller, CDC), a vehicle domain controller (vehicle domain controller, VDC), and the like. For example, a to-be-upgraded component includes but is not limited to the GW, the VCP, the HMI, the TCU, the T-box, and the ECU, and the to-be-upgraded component may include one or more of the GW, the VCP, the HMI, the TCU, the T-box, and the ECU.

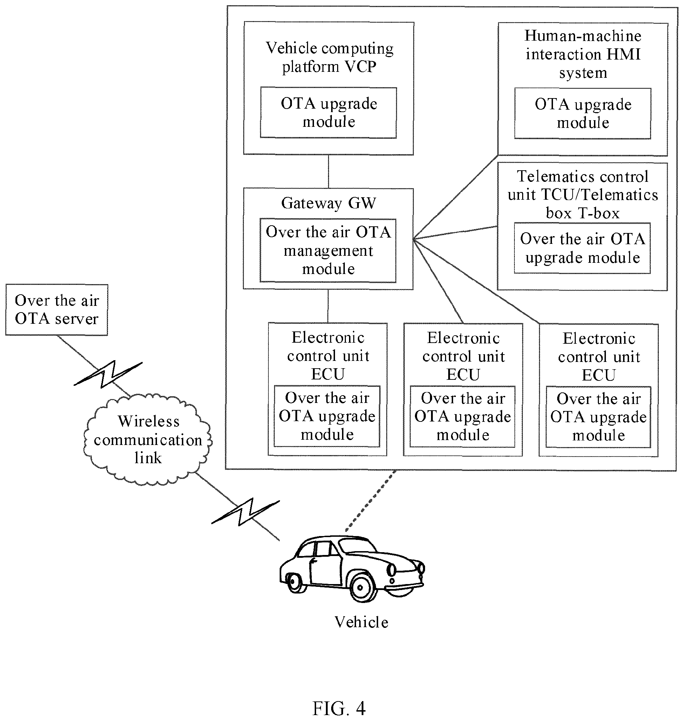

An OTA upgrade of the vehicle usually involves upgrades of a plurality of components in the vehicle. An OTA management module located in an intelligent vehicle may run on a component, for example, the GW or the T-box of the vehicle, and coordinate with OTA upgrade modules of other components to jointly complete the upgrade of the vehicle. FIG. 4 is a schematic diagram of another upgrade system architecture to which an embodiment of this application is applicable. As shown in FIG. 4, an OTA management module is deployed in a GW of a vehicle, and OTA upgrade modules are deployed in other components of the vehicle. The OTAmanagement module may coordinate with the OTA upgrade modules deployed in the components, to jointly complete an OTA upgrade of the vehicle.

In a process in which a terminal device executes an upgrade task, an original software or hardware function included in the terminal device may be in an unavailable state, causing a safety problem. An intelligent vehicle is used as an example. If an upgrade task includes an upgrade task corresponding to a power supply of the intelligent vehicle, when the intelligent vehicle executes the upgrade task, other electronic control units ECUs in the intelligent vehicle are powered off, and further in-vehicle components for which the ECUs are responsible temporarily fail. For example, when the upgrade task corresponding to the power supply is executed, a related ECU responsible for an airbag is powered off, and consequently the airbag temporarily fails. In this case, if there is a driver or a passenger in the intelligent vehicle and a collision occurs, the temporary failure of the airbag causes personal injury to the driver or the passenger in the vehicle.

In view of this, an embodiment of this application provides an upgrade method. In the method, a terminal device receives a first upgrade task, where the first upgrade task is corresponding to a first execution condition; obtains a first status of the terminal device based on the first execution condition, where the first status includes a first biometric recognition result; and performs a first operation corresponding to the first status. In this manner, different first operations may be performed based on different first biometric recognition results, so that the upgrade task is executed when safety is ensured.

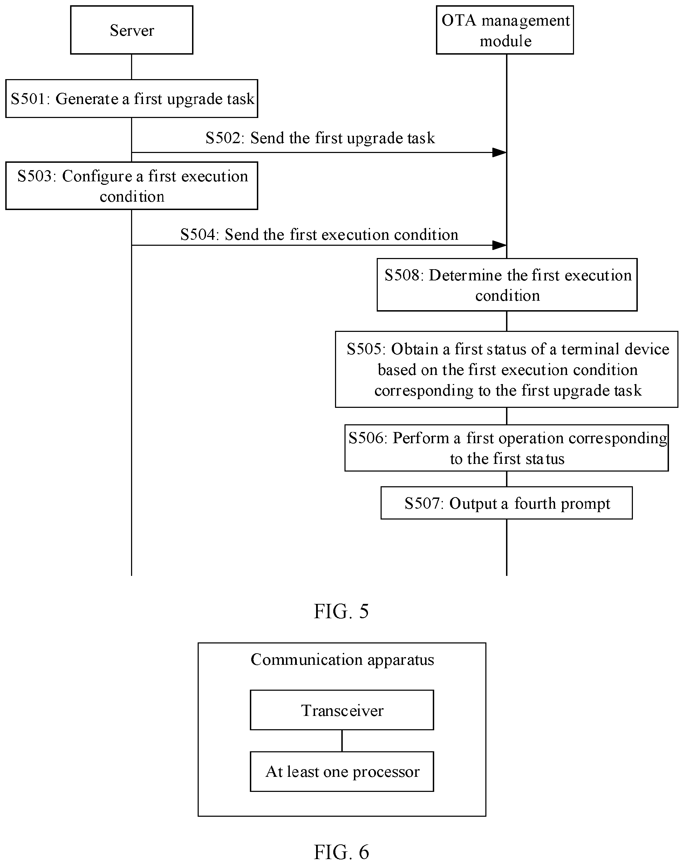

With reference to specific embodiments, the following describes the upgrade method provided in this embodiment of this application. It should be noted that, for clarity of description, an OTA management module is used as an example for description in the following embodiments. Alternatively, the OTA management module may be replaced with a terminal device. FIG. 5 is a schematic flowchart corresponding to an upgrade method according to an embodiment of this application. Further, the method may be implemented based on the upgrade system architectures shown in FIG. 1 to FIG. 4. The method may include the following steps.

S501: A server generates a first upgrade task.

The first upgrade task is corresponding to a first execution condition, the first execution condition includes a status of a terminal device, and the status of the terminal device includes that no creature exists in the terminal device.

In this embodiment of this application, the server may create an upgrade task and manage the upgrade task, including deploying the upgrade task, terminating the upgrade task, suspending the upgrade task, re-running the upgrade task, determining priorities of a plurality of upgrade tasks, or the like. For example, the generating, by the server, an upgrade task can be understood as creating, by the server, the upgrade task. The upgrade task may include one or more upgrade packages.

A vehicle is used as an example. The upgrade task specifies an upgrade process of one or a batch of to-be-upgraded vehicles. For example, the upgrade task generally specifies which vehicle-mounted devices in the vehicle or the batch of vehicles need to be upgraded, what notification needs to be sent to a user before an upgrade, what prompt needs to be given to the user, and what upgrade package is used for the upgrade. Further, the vehicle-mounted device may include HMI, a battery management system (battery management system, BMS), an infotainment system, an in-vehicle power module, and the like. This is not limited in embodiments of this application.

For example, different upgrade tasks may be corresponding to different functions. An intelligent vehicle is used as an example. An upgrade task 1 is used to upgrade the BMS, and an upgrade task 2 is used to improve memory functions of a cockpit and a seat, thereby providing better user experience.

For example, different upgrade tasks may be corresponding to different upgrade objects. An intelligent vehicle is used as an example. An upgrade task 3 is corresponding to firmware over the air (firmware over the air, FOTA), and an upgrade task 4 is corresponding to software over the air (software over the air, SOTA). The FOTA upgrade involves hardware, for example, downloading a complete image for a flash memory of an ECU, or repairing existing firmware or updating a flash memory. The SOTA focuses on an upgrade of application software, for example, an update to displaying of the HMI interface on the intelligent vehicle.

It should be understood that in this embodiment of this application, the first upgrade task is an example of upgrade tasks.

In an optional design, the first upgrade task may further include an upgrade package corresponding to the first upgrade task. Correspondingly, the generating, by a server, a first upgrade task may further include generating the corresponding upgrade package.

In this embodiment of this application, that the first upgrade task is corresponding to a first execution condition may include: The first execution condition needs to be satisfied to execute the first upgrade task. In other words, the first upgrade task is executed only when the first execution condition is satisfied.

In this embodiment of this application, the first execution condition includes the status of the terminal device.

In a possible implementation, the status of the terminal device includes that no creature exists in the terminal device. For example, in this case, the first upgrade task is executed only when no creature exists in the terminal device corresponding to the first upgrade task. Further, in an optional design, the status of the terminal device may further include one or more of the following: a driving speed of the terminal device is less than a defined or configured first threshold (for example, the driving speed of the terminal device is zero), and a quantity of electricity of the terminal device is not less than a defined or configured second threshold, a vehicle gear of the terminal device is a parking gear, and an area in which the terminal device is located is safe.

In another possible implementation, the status of the terminal device may include an attribute of the terminal device. For example, when the first execution condition includes the attribute of the terminal device, the first upgrade task is executed only when the attribute of the terminal device corresponding to the first upgrade task satisfies a preset condition. For example, the terminal device includes a creature. In this case, whether the first upgrade task is capable of being executed needs to be determined based on a status of the creature in the terminal device. For example, the first upgrade task is executed only when the status of the creature in the terminal device satisfies the preset condition. Further, in an optional design, the status of the terminal device may further include one or more of the following: a driving speed, a quantity of electricity, a vehicle gear, and an area in which the terminal device is located. It should be understood that preset conditions corresponding to different attributes of the terminal device are different. In addition, the preset condition may be defined in a protocol, preconfigured by the server for the terminal device, or implemented in another manner. This is not specifically limited.

In this embodiment of this application, the creature that exists in the terminal device may include one or more of the following: a driver, a passenger, and a pet.

In an optional design, the first upgrade task may include a plurality of upgrade subtasks. For example, the server may classify, based on upgrade components corresponding to an upgrade task, specific tasks included in one upgrade task, for example, use an upgrade task for battery software in the upgrade task as a subtask, and use an upgrade task for brake control software included in the upgrade task as another subtask. For another example, the server may classify, based on functions implemented by an upgrade task, a plurality of subtasks included in one upgrade task, for example, use an upgrade task for an autonomous driving perception function in the upgrade task as one subtask, and use a task that is in the upgrade task and that is corresponding to an autonomous driving planning function as another subtask. The server may alternatively classify specific tasks included in the first upgrade task into different upgrade subtasks according to another rule.

For example, the first upgrade task includes a first upgrade subtask, and the first upgrade subtask is corresponding to an upgrade of a biosafety-related component. The biosafety-related component is included in the terminal device. For example, the biosafety-related component is a component in the intelligent vehicle. In this embodiment of this application, in an optional design, the biosafety-related component can be understood as a component that directly or indirectly affects biosafety. For example, the biosafety-related component may include one or more of the following: a system or component (for example, an airbag system or component) used to protect safety of a driver or a passenger in the vehicle, and a power supply system or component in the vehicle. It should be understood that when an accident occurs (for example, when a collision occurs on the vehicle), the airbag system or component may protect safety of the driver or the passenger in the vehicle. Therefore, the airbag system or component may be considered as a component that directly affects biosafety. The power supply system or component in the vehicle affects power supply to ECUs in the vehicle. For example, when the power supply system or component is faulty, other ECUs in the vehicle are unavailable due to power-off. Therefore, the power supply system or component may be considered as a component that indirectly affects biosafety. In addition, the first upgrade subtask may be corresponding to FOTA or SOTA. This is not specifically limited in embodiments of this application.

In a possible implementation, in addition to the first upgrade subtask, the first upgrade task may further include another upgrade subtask. For example, the first upgrade subtask is corresponding to an upgrade of the in-vehicle power module, and the another upgrade subtask is corresponding to the update to displaying of the HMI interface on the intelligent vehicle. In another possible implementation, the first upgrade task may alternatively include only the first upgrade subtask, or the first upgrade task is an upgrade task corresponding to the upgrade of the biosafety-related component. It should be understood that in this embodiment of this application, based on specific upgrade content included in the first upgrade task, the first upgrade task may be corresponding to one or more different execution conditions. The one or more different execution conditions can be understood as being included in the first execution condition.

S502: The server sends the first upgrade task to an OTA management module.

Correspondingly, the OTA management module receives the first upgrade task. Further, in an optional design, the first upgrade task includes the upgrade package.

In an optional design, the upgrade method in this embodiment of this application may further include step S503 and step S504. This step may be mandatory in some specific scenarios. Details are as follows:
S503: The server configures the first execution condition.

For example, the server configures, based on the content of the first upgrade task, the first execution condition corresponding to the first upgrade task. If identifying that the first upgrade task includes the first upgrade subtask, the server determines that the first execution condition includes the status of the terminal device, and that the status of the terminal device includes that no creature exists in the terminal device. For the status of the terminal device, refer to related descriptions in step S501. Details are not described herein again.

S504: The server sends the first execution condition.

Correspondingly, the OTA management module receives the first execution condition.

It should be understood that the server may include the first upgrade task and the first execution condition in a same piece of signaling for sending, or may separately send the first upgrade task and the first execution condition by using different pieces of signaling.

S505: The OTA management module obtains a first status of the terminal device based on the first execution condition corresponding to the first upgrade task.

The first status includes a first biometric recognition result.

For example, after receiving the first upgrade task, the OTA management module may determine the first execution condition corresponding to the first upgrade task, where the first execution condition includes the status of the terminal device. Based on this, before executing the first upgrade task, the OTA management module needs to first obtain the first status of the terminal device. For example, if the status of the terminal device includes that no creature exists in the terminal device, before executing the first upgrade task, the OTA management module needs to first obtain the first status of the terminal device. The first status includes the first biometric recognition result, and the first biometric recognition result includes that a creature exists in the terminal device or that no creature exists in the terminal device. It should be understood that, corresponding to the another implementation of the status of the terminal device described in step S501, that is, the status of the terminal device includes the attribute of the terminal device, the OTA management module may obtain, in a similar manner, the first status corresponding to the attribute. For example, if the terminal device includes a creature, before executing the first upgrade task, the OTA management module needs to first obtain the first status of the terminal device. The first status includes the first biometric recognition result, and the first biometric recognition result includes that a creature exists in the terminal device or that no creature exists in the terminal device.

For example, in this embodiment of this application, the OTA management module may obtain the first biometric recognition result by using a sensor of the terminal device. For example, the OTA management module processes data from the sensor to obtain the first biometric recognition result. For another example, data from the sensor may directly identify the first biometric recognition result. Based on this, the OTA management module may directly obtain the first biometric recognition result. It should be understood that the OTA management module may alternatively obtain the first biometric recognition result in another manner. This is not limited in embodiments of this application. In addition, in this embodiment of this application, the sensor includes one or more of the following: a camera, a pressure sensor, a millimeter wave radar sensor, a lidar, or a sensor in another form. The sensor may be installed inside the terminal device or outside the terminal device. A specific form and an installation location of the sensor are not specifically limited in embodiments of this application.

In addition, further, in an optional design, for example, if the status of the terminal device further includes that the driving speed of the terminal device is less than the defined or configured first threshold, correspondingly, the first status further includes a first driving speed result, where the first driving speed result includes that the driving speed of the terminal device is less than the first threshold, or that the driving speed of the terminal device is not greater than the first threshold. For another example, if the status of the terminal device further includes that the quantity of electricity of the terminal device is not less than the second threshold, correspondingly, the first status further includes a first quantity-of-electricity result, where the first quantity-of-electricity result includes that the quantity of electricity of the terminal device is less than the second threshold, or that the quantity of electricity of the terminal device is not less than the second threshold. For still another example, if the status of the terminal device further includes that the vehicle gear of the terminal device is the parking gear, correspondingly, the first status further includes a first gear result, where the first gear result includes that the gear of the terminal device is the parking gear or is not the parking gear. For yet another example, if the status of the terminal device further includes that the area in which the terminal device is located is safe, correspondingly, the first status further includes a first area identification result, where the first area identification result includes that the area in which the terminal device is located is safe or unsafe. It should be understood that when the status of the terminal device is implemented by using the attribute, for example, the status of the terminal device further includes one or more of the following: the driving speed, the quantity of electricity, the vehicle gear, and the area in which the terminal device is located, the OTA management module may obtain, in a manner similar to the foregoing manner, the first status corresponding to the attribute.

S506: Perform a first operation corresponding to the first status.

In this embodiment of this application, corresponding to different first biometric recognition results, the OTA management module performs different first operations. For clarity of description, the following specifically describes different operations of the OTA management module in different cases of the first biometric recognition results.

Case 1: The first biometric recognition result is that no creature exists in the terminal device.

In this case, the performing, by the OTA management module, a first operation corresponding to the first status may include: executing, by the OTA management module, the first upgrade task. It should be understood that when the first biometric result is that no creature exists in the terminal device, it may indicate that the current status of the terminal device satisfies the first execution condition. Therefore, in this case, the OTA management module can execute the first upgrade task. For example, by using an in-vehicle camera, the OTA management module determines that the vehicle does not include a driver or a passenger, or determines that the vehicle does not include a driver, a passenger, or a pet, and then can execute the first upgrade task.

It should be understood that, in a process of executing the first upgrade task, an in-vehicle component may temporarily fail, for example, the airbag system temporarily fails. Therefore, in this manner, the first upgrade task can start to be executed only when it is determined that no creature exists in the terminal device. Based on this, the upgrade package included in the first upgrade task can be installed in an environment with ensured safety (especially ensured personal safety), that is, a safe OTA upgrade is implemented.

In addition, for example, that the OTA management module executes the first upgrade task may include: The OTA management module may distribute the upgrade package included in the first upgrade task to a corresponding OTA upgrade module, and then the OTA upgrade module is responsible for specific installation of the upgrade package; or the OTA management module is directly responsible for specific installation of the upgrade package. For example, the first upgrade task includes an upgrade package corresponding to the upgrade of the in-vehicle power module. The OTA management module may send the upgrade package to an OTA upgrade module (for example, a body control module (body control module, BCM)) responsible for upgrading the power module, and the upgrade module is responsible for installing the upgrade package; or the OTA management module may directly install the upgrade package corresponding to the upgrade of the in-vehicle power module.

Further, in an optional design, the OTA management module may further ensure, in one or more of the following manners, that an OTA upgrade task is always executed in the environment with ensured safety (especially ensured personal safety). For example, in the process of executing the first upgrade task, the OTA management module may ensure safety of the OTA upgrade in one or more of the following manners.

Manner 1: Control a door lock of the terminal device to be in a locked state and/or output a second prompt.

The terminal device herein is the terminal device corresponding to the first upgrade task.

For example, the OTA management module may control the door lock of the terminal device to be in the locked state. It should be understood that in this manner, a person outside the terminal device is not allowed to enter the terminal device. Further, in an optional design, the OTA management module may control the door lock of the terminal device to be in the locked state within a period of time. For example, when execution of the first upgrade task is completed, the OTA management module may no longer control the door lock of the terminal device to be in the locked state. In this case, the person outside the terminal device may enter the terminal device, for example, enter the terminal device by opening the lock of the vehicle.

In an optional design, that the OTA management module controls the door lock of the terminal device to be in the locked state may be implemented in the following manner: In a possible implementation, the OTA management module directly controls the door lock of the terminal device to be in the locked state. In another possible implementation, the OTA management module sends indication information A to other components in the terminal device, where the indication information A indicates the door lock of the terminal device to be in the locked state. After receiving the indication information A, the other components control the door lock of the terminal device to be in the locked state. The other components herein may include, for example, other components (such as the BCM) that can control the door lock. The OTA management module may alternatively control, in another manner, the door lock of the terminal device to be in the locked state. This is not specifically limited.

For example, the second prompt may be output to indicate that in the process of executing the first upgrade task, the person outside the terminal device is not allowed to return to the terminal device. The second prompt indicates that no creature is supposed to exist in the terminal device. Alternatively, the second prompt indicates one or both of the following: the first upgrade task is being executed, and the first execution condition. It should be understood that, because the first upgrade task is executed only when the first execution condition is satisfied, by indicating that the first upgrade task is being executed or by indicating the first execution condition, the second prompt can indicate that no creature is supposed to exist in the terminal device. After obtaining the second prompt, the user of the terminal device learns that the user cannot enter the terminal device. In an optional design, the user of the terminal device can be understood as an owner of the terminal device, for example, a vehicle owner, or can be understood as a driver and/or a passenger leaving the terminal device, or can be understood as another user that may enter the terminal device.

Further, in an optional design, the second prompt may further include time information T, to indicate that no creature is supposed to exist in the terminal device within a time range that satisfies the time information T. For clarity of description, an example in which the second prompt indicates that no creature is supposed to exist in the terminal device is used herein for description. For example, the time information T is a time needed from starting installation of the first upgrade task to completing installation of the first upgrade task, for example, two hours. In this case, after obtaining the second prompt, the user of the terminal device may determine that no creature is supposed to exist in the terminal device in two hours starting from time at which the second prompt is received (or starting from time at which the second prompt is sent, or starting from time at which the first upgrade task starts to be executed). For another example, the time information T is absolute time, and the absolute time may be corresponding to time at which installation of the first upgrade task is completed, for example, 2:00 p.m. In this case, after obtaining the second prompt, the user of the terminal device may determine that no creature is supposed to exist in the terminal device before 2:00 p.m.

In an optional design, in this embodiment of this application, the outputting a second prompt may include: directly outputting, by the OTA management module, the second prompt to the user of the terminal device, for example, directly outputting the second prompt to the driver; or outputting, by the OTA management module, the second prompt to the user of the terminal device by using a network device.

In an optional design, the second prompt may be output by using one or more of the following: a mobile phone, a wearable device, a tablet computer, and a notebook computer. In an optional design, the second prompt may be further highlighted in a prominent manner. For example, on a prompt interface (for example, the mobile phone, the wearable device, the tablet computer, or the notebook computer), a font color of the second prompt is different from font colors of prompts corresponding to other upgrade tasks, and/or a font size of the second prompt is different from font sizes of the prompts corresponding to the other upgrade tasks. Herein, the other upgrade tasks may be upgrade tasks other than the first upgrade task, or may be upgrade tasks corresponding to another execution condition different from the first execution condition. In this manner, the user of the terminal device can more easily pay attention to the execution condition of the first upgrade task, to ensure that the first upgrade task is capable of being executed in the environment with ensured safety.

For example, in this embodiment of this application, the door lock of the terminal device may be further controlled to be in the locked state and the second prompt may be further output, to ensure that the OTA upgrade is executed in the environment with ensured safety.

In the manner 1, the person outside the terminal device can be prevented from entering the terminal device in the process of executing the first upgrade task, by closing the lock of the vehicle and/or outputting a prompt. This ensures that in the process of executing the first upgrade task, the OTA upgrade is executed in the environment with ensured safety (especially ensured personal safety). Further, when the second prompt includes the time information T, the user of the terminal device can further use the terminal device in time after execution of the first upgrade task is completed.

Manner 2: Obtain a door lock status of the terminal device and/or obtain a second status of the terminal device, and suspend or terminate execution of the first upgrade task.

The door lock status includes that the door lock is opened. The second status includes a second biometric recognition result, and the second biometric recognition result is that a creature exists in the terminal device.

For example, the OTA management module may determine, by obtaining the door lock status of the terminal device, whether the person outside the terminal device attempts to enter the terminal device in the process of executing the first upgrade task. For example, if the obtained door lock status includes that the door lock is opened, the OTA management module may determine that the person outside the terminal device attempts to enter or has entered the terminal device, and then the OTA management module may suspend or terminate execution of the first upgrade task.

For example, the OTA management module may determine, by obtaining the second status of the terminal device, whether the person outside the terminal device enters the terminal device in the process of executing the first upgrade task. If the obtained second biometric result is that a creature exists in the terminal device, the OTA management module may suspend or terminate execution of the first upgrade task. For obtaining, by the OTA management module, the second status of the terminal device, refer to the manner in which the OTA management module obtains the first status in step S505. For example, the OTA management module may obtain the second biometric recognition result by using the sensor of the terminal device. Details are not described herein again.

For example, the OTA management module may further suspend or terminate execution of the first upgrade task by obtaining the door lock status of the terminal device and obtaining the second status of the terminal device. For the door lock status and the second status, refer to the foregoing descriptions. Details are not described herein again.

Further, in an optional design, in the manner 2, after the OTA management module suspends or terminates execution of the first upgrade task, the terminal device can be restored to a status that is before the first upgrade task is executed, thereby ensuring normal use of the terminal device.

It should be understood that, in the manner 2, in the process of executing the first upgrade task, once it is found that the person outside the terminal device attempts to enter or has entered the terminal device, execution of the first upgrade task can be suspended or terminated. In this way, in the process of executing the first upgrade task, the OTA upgrade is also executed in the environment with ensured safety (especially ensured personal safety). In other words, it is ensured that the OTA upgrade is always executed in the environment with ensured safety (especially ensured personal safety). In addition, in the manner 2, the terminal device can be further used in special cases. For example, in some special cases, the person outside the terminal device needs to re-enter the terminal device, for example, return to the terminal device to take out an important article or material. For another example, the terminal device needs to be reused in an emergency. In this case, normal use of the terminal device in these scenarios can be further ensured in the manner 2.

Manner 3: Obtain a door lock status of the terminal device and/or obtain a second status of the terminal device, determine that the first upgrade subtask included in the first upgrade task is completed, and continue to execute the first upgrade task.

For the door lock status and the second status, refer to specific descriptions in the manner 2. For the first upgrade subtask, refer to related descriptions in step S501. Details are not described herein again.

For example, the OTA management module may determine, based on the door lock status and/or the second status of the terminal device, that the person outside the terminal device attempts to enter or has entered the terminal device in the process of executing the first upgrade task. However, in this case, if the upgrade corresponding to the biosafety-related component has been completed, the OTA management module may continue to execute the first upgrade task. For example, the first upgrade task includes an upgrade task (the first upgrade subtask) corresponding to the upgrade of the in-vehicle power module and an upgrade task (another upgrade subtask) corresponding to the update to displaying of the HMI interface on the intelligent vehicle. In the manner 3, if the OTA management module determines, based on the door lock status and/or the second status, that the person outside the terminal device attempts to enter or has entered the terminal device, but in this case, the upgrade task corresponding to the upgrade of the in-vehicle power module has been completed, the OTA management module may not suspend or terminate the first upgrade task, and continues to execute the update task corresponding to the update to displaying of the HMI interface on the intelligent vehicle. It should be understood that if the first upgrade subtask has not been completed, the OTA management module may suspend or terminate execution of the first upgrade task.

In the manner 3, it can be ensured that an upgrade task corresponding to the biosafety-related component is capable of being executed in the environment with ensured safety, without affecting execution of other upgrade tasks. This ensures execution efficiency of an upgrade task.

It should be noted that in this embodiment of this application, safety of the OTA upgrade may be alternatively implemented by using a combination of the foregoing manner 1 to manner 3. For example, in the process of executing the first upgrade task, the OTA upgrade is also executed in the environment with ensured safety (especially ensured personal safety). For example, the OTA management module can prevent, in the manner 1, the person outside the terminal device from entering the terminal device in the process of executing the first upgrade task. However, if the person outside the terminal device enters the terminal device in the process of executing the first upgrade task, the OTA management module may further suspend or terminate execution of the first upgrade task with reference to the manner 2. This can ensure that the OTA upgrade is always executed in the environment with ensured safety (especially ensured personal safety), and can implement normal use of the terminal device when the first upgrade task has not been completed. Alternatively, when determining that the first upgrade subtask has been completed, the OTA management module may continue to execute, with reference to the manner 3, the other upgrade tasks included in the first upgrade task. This can ensure that the OTA upgrade is always executed in the environment with ensured safety (especially ensured personal safety), and can also ensure execution efficiency of an upgrade task.

Case 2: The first biometric recognition result is that a creature exists in the terminal device.

In this case, the performing, by the OTA management module, a first operation corresponding to the first status may include: skipping executing the first upgrade task and/or outputting a first prompt by the OTA management module, where the first prompt indicates that the first upgrade task is incapable of being executed. It should be understood that, if the terminal device still includes a creature, it indicates that the first execution condition corresponding to the first upgrade task is not satisfied. In this case, skipping executing the first upgrade task can ensure safety of the creature in the terminal device. In addition, the user of the terminal device can learn an execution status of the first upgrade task by outputting the first prompt.

Further, in an optional design, the first prompt may further indicate a reason why the first upgrade task is incapable of being executed and/or a condition for re-executing the first upgrade task. For example, the first prompt may further indicate that the first upgrade task needs to be executed when it is ensured that no creature exists in the terminal device. The user of the terminal device can learn, by using the prompt, the condition needed to execute the first upgrade task. In this way, before the user determines to execute the first upgrade task, it can be ensured that the terminal device does not include a creature. For example, all personnel and/or pets in the terminal device leave the terminal device. In this prompt manner, the safe OTA upgrade can be implemented.

It should be noted that, in this embodiment of this application, information that indicates the reason why the first upgrade task is incapable of being executed and/or the condition for re-executing the first upgrade task may be implemented by using the first prompt, or may be implemented in another manner, for example, implemented by using a third prompt. This is not limited in embodiments of this application.

In an optional design, in this embodiment of this application, the outputting a first prompt may include: directly outputting, by the OTA management module, the first prompt to the user of the terminal device, for example, directly outputting the first prompt to the driver; or outputting, by the OTA management module, the first prompt to the user of the terminal device by using the network device.

In an optional design, the first prompt may be output by using one or more of the following: a mobile phone, a wearable device, a tablet computer, a notebook computer, and an HMI interface.

It should be understood that for an implementation of the third prompt, refer to the implementation of the first prompt. Details are not described herein again.

In an optional design, the first prompt or the third prompt may be further highlighted in a prominent manner. For example, on a prompt interface (for example, the HMI interface, the mobile phone, the wearable device, the tablet computer, or the notebook computer), a font color of the first prompt or the third prompt is different from the font colors of the prompts corresponding to the other upgrade tasks, and/or a font size of the first prompt or the third prompt is different from the font sizes of the prompts corresponding to the other upgrade tasks. Herein, the other upgrade tasks may be the upgrade tasks other than the first upgrade task, or may be the upgrade tasks corresponding to the another execution condition different from the first execution condition. In this manner, the user of the terminal device can more easily pay attention to the execution condition and the execution status of the first upgrade task, to more quickly learn the condition under which the first upgrade task is capable of being executed, and ensure that the first upgrade task is capable of being executed in the environment with ensured safety.

In an optional design, the upgrade method in this embodiment of this application may further include step S507 before step S505. This step may be mandatory in some specific scenarios. Step S507 is specifically as follows:
S507: Output a fourth prompt.

The fourth prompt indicates the first execution condition.

In an optional design, in this embodiment of this application, the outputting a fourth prompt may include: directly outputting, by the OTA management module, the first prompt to the user of the terminal device, for example, directly outputting the fourth prompt to the driver; or outputting, by the OTA management module, the fourth prompt to the user of the terminal device by using the network device.

In an optional design, the fourth prompt may be output by using one or more of the following: a mobile phone, a wearable device, a tablet computer, a notebook computer, and an HMI interface.

In an optional design, the fourth prompt may be further highlighted in a prominent manner. For example, on a prompt interface (for example, the HMI interface, the mobile phone, the wearable device, the tablet computer, or the notebook computer), a font color of the fourth prompt is different from the font colors of the prompts corresponding to the other upgrade tasks, and/or a font size of the fourth prompt is different from the font sizes of the prompts corresponding to the other upgrade tasks. Herein, the other upgrade tasks may be the upgrade tasks other than the first upgrade task, or may be the upgrade tasks corresponding to the another execution condition different from the first execution condition. In this manner, the user of the terminal device can more easily pay attention to the execution condition of the first upgrade task, to more quickly learn the condition under which the first upgrade task is capable of being executed, and ensure that the first upgrade task is capable of being executed in the environment with ensured safety.

Further, in an optional design, the OTA management module may further determine, based on a user setting of the terminal device, whether to start to obtain the first status of the terminal device based on confirmation information B in response to the fourth prompt. In an optional design, whether an upgrade task needs to be confirmed by the user of the terminal device before being executed may be preset by the user of the terminal device. For clarity of description, an example in which the driver is the user of the terminal device is used herein for description. For an upgrade task, the driver may preset whether to execute the upgrade task based on the information B. For example, the driver may enable, on the mobile phone, a setting corresponding to the confirmation information B or a setting corresponding to the upgrade task. In this case, before receiving the first upgrade task and performing an action associated with the first upgrade task, the OTA management module needs to first obtain confirmation information (corresponding to the confirmation information B) of the driver. Herein, the operation associated with the first upgrade task may include obtaining the first status of the terminal device and/or executing the first upgrade task. Specifically, after the fourth prompt is output, the OTA management module can obtain the first status of the terminal device only after confirmation of the driver is obtained (for example, confirmation is implemented by using an application (application, APP) of the mobile phone). For another example, the driver may disable, on the mobile phone, the setting corresponding to the information B or the setting corresponding to the upgrade task. In this case, before receiving the first upgrade task and performing the action associated with the first upgrade task, the OTA management module does not need to obtain the confirmation information (corresponding to the confirmation information B) of the driver. Specifically, after outputting the fourth prompt, the OTA management module may start to perform the action associated with the first upgrade task, for example, obtain the first status of the terminal device. In this manner, flexibility of the OTA upgrade can be implemented. Further, when it is specified that an operation associated with an upgrade task needs to be performed based on the confirmation information corresponding to the fourth information, the user of the terminal device may choose to start execution of the first upgrade task in a proper scenario. This can ensure normal use of the terminal device, and can ensure that the OTA upgrade is executed in the safe environment. Specifically, for example, when the terminal device is in use, the user of the terminal device may not confirm the received fourth prompt. In this case, the first upgrade task is not executed temporarily. When the user of the terminal device determines that the first upgrade task is capable of being executed, the user of the terminal device may confirm the received fourth prompt. In this case, the OTA management module may start to obtain the first status of the terminal device.

In an optional design, the upgrade method in this embodiment of this application may further include step S508 before step S505. This step may be mandatory in some specific scenarios. Step S508 is specifically as follows:
S508: Determine the first execution condition.

In an implementation, the OTA management module receives the first execution condition from the server, and determines the first execution condition.

In another implementation, the OTA management module determines the first execution condition based on a mapping relationship between an upgrade task and an execution condition. For example, the mapping relationship may be configured or defined. For example, the OTA server may configure or define the mapping relationship, and send the mapping relationship to the OTA management module in advance. After receiving the first upgrade task, the OTA management module may determine, based on the mapping relationship, the first execution condition corresponding to the first upgrade task. For example, the OTA management module may determine the first execution condition based on the content included in the first upgrade task and with reference to the mapping relationship. In this manner, signaling overheads can be reduced.

Based on the foregoing descriptions, in the manner shown in this embodiment of this application, before the first upgrade task is executed, the first status including the first biometric recognition result is obtained, and the first operation corresponding to the first status is performed based on different first biometric recognition results, so that the safe OTA upgrade can be implemented. In other words, it is ensured that the OTA upgrade is capable of being executed in the environment with ensured safety (especially ensured personal safety).

It should be noted that a sequence of the steps included in the method in embodiments of this application may be adjusted, or the steps may be combined or deleted depending on an actual requirement.

The foregoing describes the upgrade method provided in embodiments of this application with reference to FIG. 5. The following details apparatuses provided in embodiments of this application with reference to FIG. 6 to FIG. 8.

FIG. 6 is a schematic block diagram of a communication apparatus according to an embodiment of this application. As shown in FIG. 6, the communication apparatus may include at least one processor and a transceiver, to perform the method in any one of the foregoing possible implementations. The at least one processor may be configured to perform internal processing of the apparatus, for example, obtain a first status of a terminal device based on a first execution condition; for another example, output a first prompt, where the first prompt indicates that a first upgrade task is incapable of being executed; for still another example, execute the first upgrade task; and for yet another example, generate the first upgrade task. The transceiver is configured to perform functions related to sending and receiving, for example, send information to another apparatus or receive information from another apparatus.

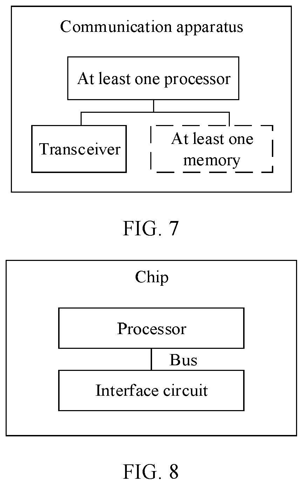

Further, in an optional design, the communication apparatus may further include at least one memory, as shown in a dashed box in FIG. 7. FIG. 7 is a schematic block diagram of a communication apparatus according to an embodiment of this application. The at least one memory is coupled to the at least one processor and the transceiver that are included in the communication apparatus. It can be understood that the at least one memory, the at least one processor, and the transceiver communicate with each other by using an internal connection path. Specifically, the at least one processor may be configured to execute instructions in the at least one memory, so that the apparatus performs the method in any one of the possible implementations in embodiments of this application.

In another implementation, the communication apparatus includes a processing unit and a transceiver unit that are configured to perform the method in any one of the possible implementations in embodiments of this application.

In an optional design, the communication apparatus may be an apparatus of a terminal device or an apparatus of an OTA management module, and in this case, the communication apparatus may be configured to perform any method performed by the terminal device or the OTA management module in the foregoing descriptions. Alternatively, the communication apparatus may be an apparatus of a server, and in this case, the communication apparatus may be configured to perform any method performed by the server in the foregoing descriptions.

In an optional design, the communication apparatus is a communication chip, and the transceiver may be an input/output circuit or port of the communication chip. In another optional design, the transceiver included in the communication apparatus may include a transmitter and a receiver, or include a sending set and a receiving set.

In this embodiment of this application, the communication apparatus may be corresponding to a chip in the terminal device in any one of the possible implementations in embodiments of this application, or may be corresponding to a chip in the OTA management module in any one of the possible implementations in embodiments of this application.

An embodiment of this application further provides a terminal device. The terminal device includes a communication apparatus configured to perform the method in any one of the foregoing possible implementations performed by the OTA management module.

An embodiment of this application further provides a server. The server includes a communication apparatus configured to perform the method in any one of the foregoing possible implementations performed by the server.

An embodiment of this application further provides a communication system. The communication system includes one or more of the following: the communication apparatus configured to perform the method in any one of the foregoing possible implementations performed by the OTA management module and the communication apparatus configured to perform the method in any one of the foregoing possible implementations performed by the server.

In addition, an embodiment of this application further provides a chip, as shown in FIG. 8. FIG. 8 is a schematic diagram of a structure of a chip. The chip includes one or more processors and an interface circuit. The interface circuit is configured to provide information input and/or output for the one or more processors to perform the method in any one of the foregoing possible implementations. In an optional design, the chip may further include a bus.

For example, the processor is an integrated circuit chip and has a signal processing capability. For example, the processor may be a field programmable gate array (field programmable gate array, FPGA), a general purpose processor, a digital signal processor (digital signal processor, DSP), an application-specific integrated circuit (application-specific integrated circuit, ASIC), another programmable logic device, a discrete gate, a transistor logic device, a discrete hardware component, a system on chip (system on chip, SoC), a central processing unit (central processing unit, CPU), a network processor (network processor, NP), a microcontroller (micro controller unit, MCU), a programmable controller (programmable logic device, PLD), or another integrated chip. The processor can implement or perform the methods, steps and logical block diagrams disclosed in embodiments of this application. The general purpose processor may be a microprocessor, or the processor may be any conventional processor or the like. The steps of the method disclosed with reference to embodiments of this application may be directly implemented by a hardware decoding processor, or may be implemented by a combination of hardware in a decoding processor and a software module. The software module may be in a mature storage medium in the art, for example, a random access memory, a flash memory, a read-only memory, a programmable read-only memory, an electrically erasable programmable memory, or a register. The storage medium is located in a memory, and the processor reads information from the memory and completes the steps in the foregoing method in combination with hardware of the processor.

The interface circuit may be configured to send or receive data, instructions, or information. The processor may perform processing by using the data, the instructions, or other information received by the interface circuit, and may send, by using the interface circuit, information obtained through processing.

In an optional design, the chip further includes a memory, which may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM for short), or a flash memory. The volatile memory may be a random access memory (random access memory, RAM) and is used as an external cache. By way of example rather than limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that functions respectively corresponding to the processor and the interface circuit may be implemented by using a hardware design, may be implemented by using a software design, or may be implemented by using a combination of software and hardware. This is not limited herein.

It should be noted that the memories in the systems and the method that are described in this specification are intended to include but are not limited to these memories and any other appropriate types of memories.

An embodiment of this application further provides a computer program product. The computer program product includes computer program code. When the computer program code is run on a computer, the computer is enabled to perform the method in any one of the possible implementations performed by a first node in the foregoing descriptions, or perform the method in any one of the possible implementations performed by a second node in the foregoing descriptions.

This application further provides a computer-readable medium. The computer-readable medium stores program code. When the program code is run on a computer, the computer is enabled to perform the method in any one of the foregoing possible implementations.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the systems, apparatuses, and units, refer to corresponding processes in the method embodiments. Details are not described herein again.

In the several embodiments provided in this application, it should be understood that the disclosed systems, apparatuses, and method may be implemented in other manners. For example, the described apparatus embodiments are merely examples. For example, the division into units is merely logical function division and may be other division in actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or at least two units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An upgrade method, wherein the method comprises:
receiving a first upgrade task, wherein the first upgrade task is corresponding to a first execution condition;
obtaining a first status of a terminal device based on the first execution condition, wherein the first status comprises a first biometric recognition result; and
performing a first operation corresponding to the first status.

2. The method according to claim 1, wherein the performing a first operation corresponding to the first status comprises:
if the first biometric recognition result is that a creature exists in the terminal device, performing the first operation corresponding to the first status is outputting a first prompt, wherein the first prompt indicates that the first upgrade task is incapable of being executed; or
if the first biometric recognition result is that no creature exists in the terminal device, performing the first operation corresponding to the first status is executing the first upgrade task.

3. The method according to claim 2, wherein when performing the first operation corresponding to the first status is executing the first upgrade task, the method further comprises:
controlling a door lock of the terminal device to be in a locked state and/or outputting a second prompt, wherein the second prompt indicates that no creature is supposed to exist in the terminal device.

4. The method according to claim 2 or 3, wherein when performing the first operation corresponding to the first status is executing the first upgrade task, the method further comprises:
obtaining a door lock status of the terminal device, wherein the door lock status of the terminal device comprises that the door lock is opened; and/or
obtaining a second status of the terminal device, wherein the second status comprises a second biometric recognition result, and the second biometric recognition result is that a creature exists in the terminal device; and
suspending or terminating execution of the first upgrade task.

5. The method according to claim 2 or 3, wherein when performing the first operation corresponding to the first status is executing the first upgrade task, the method further comprises:
obtaining a door lock status of the terminal device, wherein the door lock status of the terminal device comprises that the door lock is opened; and/or
obtaining a second status of the terminal device, wherein the second status comprises a second biometric recognition result, and the second biometric recognition result is that a creature exists in the terminal device;
determining that a first upgrade subtask comprised in the first upgrade task is completed, wherein the first upgrade subtask is corresponding to an upgrade of a biosafety-related component; and
continuing to execute the first upgrade task.

6. The method according to claim 2, wherein when performing the first operation corresponding to the first status is outputting the first prompt, the method further comprises:
outputting a third prompt, wherein the third prompt indicates a reason why the first upgrade task is incapable of being executed and/or a condition for re-executing the first upgrade task.

7. The method according to any one of claims 1 to 6, wherein before the obtaining a first status of a terminal device, the method further comprises:
outputting a fourth prompt, wherein the fourth prompt indicates the first execution condition.

8. The method according to any one of claims 1 to 7, wherein the method further comprises:
receiving the first execution condition from a server; or
determining the first execution condition based on a configured or defined mapping relationship between an upgrade task and an execution condition.

9. The method according to any one of claims 1 to 8, wherein the obtaining a first status of a terminal device comprises: obtaining the first status by using a sensor in the terminal device, wherein the sensor comprises one or more of the following: a camera, a pressure sensor, a millimeter wave radar sensor, and a Lidar.

10. An upgrade method, wherein the method comprises:
generating a first upgrade task, wherein the first upgrade task is corresponding to a first execution condition, the first execution condition comprises a status of a terminal device, and the status of the terminal device comprises that no creature exists in the terminal device; and
sending the first upgrade task.

11. The method according to claim 10, wherein the method further comprises:
configuring the first execution condition based on the first upgrade task; and
sending the first execution condition.

12. The method according to claim 10 or 11, wherein the first upgrade task comprises a first upgrade subtask, and the first upgrade subtask is corresponding to an upgrade of a biosafety-related component.

13. A communication apparatus, comprising:
a transceiver unit, configured to receive a first upgrade task, wherein the first upgrade task is corresponding to a first execution condition; and
a processing unit, configured to obtain a first status of a terminal device based on the first execution condition, wherein the first status comprises a first biometric recognition result; and perform a first operation corresponding to the first status.

14. The apparatus according to claim 13, wherein the performing, by the processing unit, a first operation corresponding to the first status comprises:
if the first biometric recognition result is that a creature exists in the terminal device, performing, by the processing unit, the first operation corresponding to the first status is outputting a first prompt by the processing unit, wherein the first prompt indicates that the first upgrade task is incapable of being executed; or
if the first biometric recognition result is that no creature exists in the terminal device, performing, by the processing unit, the first operation corresponding to the first status is executing the first upgrade task by the processing unit.

15. The apparatus according to claim 14, wherein when performing, by the processing unit, the first operation corresponding to the first status is executing the first upgrade task by the processing unit, the processing unit is further configured to:
control a door lock of the terminal device to be in a locked state and/or output a second prompt, wherein the second prompt indicates that no creature is supposed to exist in the terminal device.

16. The apparatus according to claim 14 or 15, wherein when performing, by the processing unit, the first operation corresponding to the first status is executing the first upgrade task by the processing unit, the processing unit is further configured to:
obtain a door lock status of the terminal device, wherein the door lock status of the terminal device comprises that the door lock is opened; and/or
obtain a second status of the terminal device, wherein the second status comprises a second biometric recognition result, and the second biometric recognition result is that a creature exists in the terminal device; and
suspend or terminate execution of the first upgrade task.

17. The apparatus according to claim 14 or 15, wherein when performing, by the processing unit, the first operation corresponding to the first status is executing the first upgrade task by the processing unit, the processing unit is further configured to:
obtain a door lock status of the terminal device, wherein the door lock status of the terminal device comprises that the door lock is opened; and/or
obtain a second status of the terminal device, wherein the second status comprises a second biometric recognition result, and the second biometric recognition result is that a creature exists in the terminal device;
determine that a first upgrade subtask comprised in the first upgrade task is completed, wherein the first upgrade subtask is corresponding to an upgrade of a biosafety-related component; and
continue to execute the first upgrade task.

18. The apparatus according to claim 14, wherein when performing, by the processing unit, the first operation corresponding to the first status is outputting the first prompt by the processing unit, the processing unit is further configured to:
output a third prompt, wherein the third prompt indicates a reason why the first upgrade task is incapable of being executed and/or a condition for re-executing the first upgrade task.

19. The apparatus according to any one of claims 13 to 18, wherein the processing unit is further configured to:
output a fourth prompt, wherein the fourth prompt indicates the first execution condition.

20. The apparatus according to any one of claims 13 to 19, wherein the transceiver unit is further configured to receive the first execution condition from a server; or the processing unit is further configured to determine the first execution condition based on a configured or defined mapping relationship between an upgrade task and an execution condition.

21. A communication apparatus, comprising:
a processing unit, configured to generate a first upgrade task, wherein the first upgrade task is corresponding to a first execution condition, the first execution condition comprises a status of a terminal device, and the status of the terminal device comprises that no creature exists in the terminal device; and
a transceiver unit, configured to send the first upgrade task.

22. The apparatus according to claim 21, wherein the processing unit is further configured to configure the first execution condition based on the first upgrade task; and the transceiver unit is further configured to send the first execution condition.

23. The apparatus according to claim 22, wherein the first upgrade task comprises a first upgrade subtask, and the first upgrade subtask is corresponding to an upgrade of a biosafety-related component.

24. A communication apparatus, wherein the communication apparatus comprises at least one processor and a transceiver, and the at least one processor is configured to invoke a computer program stored in at least one memory, to perform the method according to any one of claims 1 to 9 or any one of claims 10 to 12.

25. A terminal device, comprising the communication apparatus configured to perform the method according to any one of claims 1 to 9.

26. A server, comprising the communication apparatus configured to perform the method according to any one of claims 10 to 12.

27. A communication system, comprising the communication apparatus configured to perform the method according to any one of claims 1 to 9 and/or the communication apparatus configured to perform the method according to any one of claims 10 to 12.

28. A chip, comprising one or more processors and an interface circuit, wherein the interface circuit is configured to provide information input and/or output for the one or more processors, and the chip is configured to perform the method according to any one of claims 1 to 9 or any one of claims 10 to 12.

29. A computer-readable storage medium, wherein the computer-readable storage medium stores a computer program or instructions, and when the computer program or instructions are executed by a communication apparatus, the method according to any one of claims 1 to 9 or any one of claims 10 to 12 is implemented.

30. A computer program product, wherein when the computer program product is run on one or more processors, the method according to any one of claims 1 to 9 or any one of claims 10 to 12 is implemented.
